# FASCICULE DE BREVET EUROPEEN

(11) **EP 0 802 200 B1**
(45) Date de publication et mention de la délivrance du brevet: **07.02.2001**
(21) Numéro de dépôt: 97400856.7
(22) Date de dépôt: 16.04.1997
(51) Int. Cl.: C08F 2/18

(54) **Procédé pour la préparation de poudres de polymère par polymérisation en suspension**
Verfahren zur Herstellung von Polymerpulver durch Suspensionspolymerisation
Process for preparing polymer powders by suspension polymerization

(30) Priorité: 17.04.1996 FR 9604790
(43) Date de publication de la demande: 22.10.1997
(73) Titulaire: Atofina, 92800 Puteaux (FR)
(72) Inventeur: Biensan, Michel, 64140 Lons (FR)
(74) Mandataire: Luziau, Nelly

(56) Documents cités:
- EP-A- 0 506 247
- US-A- 3 222 340
- US-A- 5 142 008

## Description

La présente invention porte sur un procédé de fabrication de poudres de polymère, en particulier de poudres fines de polymère, par polymérisation en suspension. Par poudres fines, on entend des poudres dont le diamètre moyen est compris entre environ 1 et 100 µm, en particulier entre environ 5 et 50 µm. Ce procédé est, cependant, aussi, utilisable pour préparer des perles ayant généralement un diamètre moyen supérieur à 100 µm.

La production de ces poudres par polymérisation en suspension en présence d'au moins un agent de suspension, s'accompagne généralement d'une polymérisation parasite en émulsion dont le taux, rapporté au poids de monomère, peut atteindre 10 à 25 % environ. Outre les pertes de rendement correspondantes, ceci a pour conséquence d'obtenir une phase aqueuse très riche en polymère qui nécessite un traitement avant rejet de cette phase aqueuse.

Cette quantité de monomères, perdue par polymérisation en émulsion simultanée à la polymérisation principale en suspension, est proportionnelle à la quantité d'agents de suspension utilisée. Pour obtenir des particules de faible granulométrie, il faut utiliser de plus grandes quantités d'agents de suspension et, par suite, les pertes en monomères, par polymérisation en émulsion, sont plus importantes.

La présente invention a pour but de supprimer cette polymérisation en émulsion parasite.

Le brevet américain US-A-5 142 008 concerne la fabrication de perles de poly(méthacrylate de méthyle) par polymérisation en suspension aqueuse, en présence d'un agent de suspension organique, soluble dans l'eau, de masse moléculaire élevée. Pour limiter la polymérisation parasite en émulsion, la polymérisation en suspension a lieu en présence d'au moins un additif choisi parmi les acides phosphoniques polyvalents ou leurs sels de métaux alcalins ou d'ammonium. Les perles obtenues par ce procédé connu ont un diamètre moyen d'environ 300 µm. La dimension des perles permet d'utiliser des taux d'agent de suspension faibles (0,05 % à 1 % en poids par rapport à l'eau du mélange de polymérisation en suspension), avec, par conséquent, des pertes de rendement dues à la polymérisation parasite en émulsion, corrélativement plus faibles que celles observées lors de la fabrication de poudres fines. Cependant, même dans ce cas de polymérisation en suspension de perles de polymère de diamètre moyen assez élevé (environ 300 µm), les pertes de rendement sont encore notables, n'étant pas inférieures à 0,8 % et, généralement supérieures à 1 %.

La Société déposante a maintenant découvert que le problème posé de la polymérisation parasite en émulsion lors d'une polymérisation en suspension, en particulier pour l'obtention de poudres fines, peut être résolu par l'emploi simultané de deux additifs particuliers, à savoir un inhibiteur capteur de radicaux libres et un agent complexant.

La présente invention a pour objet un procédé de fabrication de poudres de (co)polymère par polymérisation en suspension aqueuse d'au moins un monomère polymérisable en suspension, ladite polymérisation en suspension aqueuse étant conduite en présence d'au moins un générateur de radicaux libres comme catalyseur et en présence d'au moins un agent de suspension, caractérisé par le fait que l'on conduit la polymérisation également en présence de :
(a) au moins un inhibiteur capteur de radicaux libres et
(b) au moins un agent complexant.

Les inhibiteurs (a) peuvent être choisis notamment parmi les quinones substituées ou non, comme la benzoquinone, la 2,5-dichlorobenzoquinone, la 2,6-dichlorobenzoquinone, la 3,4,5,6-tétrachloro-1,2-benzoquinone, les phénols, comme l'hydroquinone, le pyrocatéchol, le 4-tert-butylpyrocatéchol, les méthoxyphenols dont le 2,6-ditertbutyl-4-méthylphénol.

L'agent complexant (b) peut être choisi parmi l'acide éthylènediaminetétra acétique et ses sels, les acides phosphoniques polyvalents et leurs sels, l'acide citrique et ses sels et les acides polyhydroxamiques.

Les sels de l'acide éthylènediaminetétraacétique entrant dans la définition de l'additif (b) sont notamment constitués par le sel de sodium et le sel d'ammonium.

Les acides phosphoniques polyvalents entrant également dans la définition de l'additif (b) sont notamment constitués par ceux qui contiennent de 2 à 10 groupes acide dans la molécule. Leurs sels sont notamment ceux de métaux alcalins et d'ammonium. A titre d'exemples de ces acides phosphoniques polyvalents et de leurs sels, on peut citer l'acide 1-hydroxyéthane-1,1-diphosphonique, l'acide nitrilotris(méthylènephosphonique), l'acide éthylènediaminetétra(méthylènephosphonique), l'acide hexaméthylènediaminetétra(méthylènephosphonique), l'acide diéthylènetriaminepenta(méthylène phosphonique) et leurs sels de sodium.

Les additifs (a) et (b) selon l'invention sont généralement ajoutés à la phase aqueuse pour ce qui est de l'additif (a), à raison de 2 à 50 % en mole, de préférence de 5 à 20 % et, pour ce qui est de l'additif (b), à raison de 2 à 50 % en mole, de préférence, de 5 à 20 %, ces valeurs étant données par rapport à la quantité molaire de catalyseur présent dans le système de polymérisation en suspension.

Le procédé selon l'invention est approprié pour la polymérisation de tous les monomères et mélanges de monomères qui sont couramment polymérisés en suspension, tels que les esters de l'acide acrylique ou de l'acide méthacrylique et les monomères vinylaromatiques.

A titre d'exemples d'esters de l'acide acrylique et de l'acide méthacrylique, on peut citer ceux avec les alcools monovalents, en particulier les alcools en C₁-C₁₈, tels que (méth) acrylate de méthyle, (méth) acrylate d'éthyle, (méth) acrylate de n-propyle, (méth) acrylate d'isopropyle, (méth) acrylate de butyle, (méth) acrylate d'hexyle, (méth) acrylate d'éthyl-2-hexyle, (méth) acrylate de lauryle, (méth) acrylonitrile, dialkyl (méth) acrylamide ainsi que méthacrylate de glycidyle et méthacrylate de norbornyle.

Comme monomères vinylaromatiques, on peut citer le styrène, le vinyltoluène, le p-tert.-butylstyrène ou l'alpha-méthylstyrène.

Les monomères précités peuvent être utilisés seuls ou en mélange.

On peut citer plus particulièrement le méthacrylate de méthyle et les mélanges comportant au moins 50 % en poids de méthacrylate de méthyle, le ou les monomères restants étant choisis par exemple parmi les acrylates, comme l'acrylate d'éthyle.

Les agents de suspension comprennent notamment les alcools polyvinyliques, en particulier ceux ayant un taux d'hydrolyse au moins égal à 75 %, de préférence de 85 - 90 % ; les éthers de cellulose, tels que l'hydroxyéthylcellulose et la carboxyméthylcellulose sodique ; le phosphate tricalcique ; et les homopolymères de l'acide acrylique ou de l'acide méthacrylique ou les copolymères d'au moins 50 % en poids de ces acides avec un ou des comonomères copolymérisables avec eux, notamment le méthacrylate de méthyle, ces homo- ou copolymères étant utilisés de façon particulièrement préférée sous la forme de leurs sels de métaux alcalins ou de leurs sels d'ammonium ou bien sous forme neutralisée par le phosphate disodique.

Les agents de suspension sont avantageusement utilisés dans une quantité de 0,05 à 5 % en poids, notamment 0,25 à 1 % en poids par rapport à l'eau présente dans le système de polymérisation en suspension.

L'emploi simultané des additifs (a) et (b) selon l'invention, permet d'augmenter le rapport pondéral de la phase organique par rapport à la phase aqueuse et de diminuer le taux d'agent de suspension jusqu'à 0,25 %, ce qui permet notamment d'augmenter la productivité en polymère et de réduire le coût dû à l'emploi d'agent de suspension.

Tous les catalyseurs générateurs de radicaux libres classiques, notamment les peroxydes et les composés azoïques ayant généralement des températures de décomposition inférieures à 120°C, peuvent être utilisés comme catalyseurs de polymérisation, et ils sont généralement ajoutés à la phase du ou des monomères. A titre d'exemples de catalyseurs, on peut citer le 2-éthylperoxyhexanoate, le peroxyde de dilauroyle, le peroxyde de dibenzoyle, le peroxyde de bis(4-chlorobenzoyle), le peroxyde de bis-(2,4-dichlorobenzoyle), le peroxyde de bis-(2-méthylbenzoyle), l'azobisisobutyronitrile et l'azobis-(2,4-diméthyl)-valéronitrile ; on peut également mentionner le peroxydicarbonate de dicétyle.

D'une manière générale, on utilise un ou plusieurs de ces catalyseurs à raison de 0,1 - 5 % en poids par rapport à la phase du ou des monomères, et de préférence de 0,2% à 1 %.

On peut également, de façon connue, ajouter à la phase du ou des monomères, jusqu'à 8 % en poids par rapport aux monomères, d'au moins un agent de transfert de chaîne, afin d'ajuster la masse moléculaire du polymère formé. A titre d'exemples d'agents de transfert de chaîne, on peut citer les mercaptans, comme le n-octylmercaptan, le n-dodécylmercaptan, le tert.-dodécylmercaptan ou le cyclohexylmercaptan, l'acide thioglycolique ou des esters de l'acide thioglycolique, comme l'ester isooctylique de l'acide thioglycolique.

En plus des catalyseurs et des agents de transfert de chaîne, la phase du ou des monomères peut également contenir des additifs habituels, par exemple des lubrifiants comme l'acide stéarique, des stabilisants, par exemple des stabilisants UV, des sels tampons, etc.

Si l'on veut obtenir des polymères réticulés, la phase du ou des monomères peut également contenir jusqu'à environ 10 % en poids de monomères polyfonctionnels, comme le di(méth)acrylate d'éthylène glycol, le di(méth)acrylate de butanediol ou le divinylbenzène.

Le procédé de la présente invention peut être conduit de manière classique pour une polymérisation en suspension. Dans un mode de réalisation en discontinu, on prépare la phase aqueuse contenant l'agent de suspension, le ou les additifs (a) et (b) et, facultativement, d'autres additifs classiques et on l'introduit dans un réacteur de polymérisation approprié. On prépare la phase du ou des monomères, contenant les additifs solubles dans le ou les monomères, tels que les catalyseurs, les agents de transfert de chaîne, les lubrifiants, etc. sous forme dissoute, puis on l'ajoute à la phase aqueuse sous agitation. La mise en suspension s'effectue selon les techniques connues. Pour obtenir des poudres de polymère d'une granulométrie supérieure ou égale à 20 µm, on utilise généralement un dispositif d'agitation du type "impeller" ou "ancre". Pour l'obtention de poudres de polymère d'une granulométrie inférieure à 20 µm, on utilise généralement une turbine, par exemple, en laboratoire, une turbine Ultra Turax modèle T 45 équipée d'une tête T 45 - 4 G d'un diamètre de 45 mm. L'oxygène atmosphérique contenu dans le système de polymérisation est avantageusement éliminé par balayage à l'azote. On commence alors la polymérisation en chauffant le milieu réactionnel.

Le rapport monomère(s) / eau se situe entre 1/10 et 1/1 en règle générale et, de préférence, entre 1/4 et 1/2. La température de polymérisation se situe habituelentre approximativement 60° et 120°C, selon le catalyseur utilisé. La polymérisation a lieu de manière adiabatique ou avec élimination au moins partielle de la chaleur de polymérisation par refroidissement, en fonction du rapport monomère(s) / eau utilisé. La polymérisation en suspension dure généralement de 30 minutes à 7 heures, en particulier de 1 heure à 3 heures et demi.

A la fin de la polymérisation, la charge est refroidie et le polymère formé est séparé par filtration ou centrifugation. Il est avantageux qu'il soit lavé avec de l'eau directement sur le filtre ou dans la machine de centrifugation. Il est ensuite séché dans un appareil de séchage approprié, par exemple dans un four de séchage ou dans un séchoir à lit fluidisé. Le diamètre moyen des poudres obtenues par le procédé de l'invention dépend de la quantité d'agent de suspension utilisée. Ainsi, on peut obtenir des perles d'un diamètre moyen supérieur à 100 µm ou bien des poudres fines de 1 à 100 µm, en particulier de 5 à 50 µm.

Le procédé selon l'invention permet de récupérer, après filtration du polymère, une phase aqueuse qui a une composition pratiquement identique à celle de départ. En effet, le taux d'agent de suspension est pratiquement inchangé (le dosage ne permet pas de déterminer une différence significative) et la quantité de polymère en émulsion est pratiquement nulle (inférieure à la limite détectable qui est de 0,1 %). Il est alors possible de recycler la phase aqueuse. A cette phase aqueuse utilisée pour le recyclage, on ajoute les additifs (a) et (b) selon l'invention aux taux indiqués précédemment. Le recyclage de la phase aqueuse présente l'avantage d'éviter ou de réduire le rejet de cette phase et de diminuer la consommation en agents de suspension.

L'invention est illustrée plus en détail par les exemples suivants. Dans ces exemples, les pourcentages sont en poids sauf indication contraire.

Les agents de suspension utilisés dans les exemples sont les suivants :
- alcool polyvinylique 26/88 (APV 26/88)
- alcool polyvinylique 4/88 (APV 4/88)
(88 = taux d'hydrolyse des motifs acétate de vinyle
26 et 4 = valeurs de la viscosité exprimée en mPa.s pour une solution aqueuse à 4 % à 20°C).

### Exemple 1: Polymérisation en suspension du méthacrylate de méthyle

### (a) Préparation de la phase aqueuse

21,84 g d'APV 26/88 et 11,67 g d'APV 4/88 (taux pondéral 65 % / 35 %) sont chargés lentement par dispersion dans 3326,4 g d'eau froide agitée pour éviter la formation d'agglomérats. On chauffe ensuite à 90°C pendant 2 heures. Après refroidissement à la température ambiante, on ajoute 0,102 g de benzoquinone et 0,185 g d'acide éthylènediaminetétraacétique (EDTA).

### (b) Préparation de la phase organique

2,52 g de peroxyde de dilauroyle sont ajoutés à la température ambiante sur 840 g de méthacrylate de méthyle. La dissolution est immédiate.

### (c) Mise en suspension

Elle est effectuée en turbine. L'agitation est maintenue 5 minutes à 140 tr/min. La suspension est transférée dans un réacteur de polymérisation en acier inoxydable.

Après mise en suspension, on obtient une dispersion parfaitement stable qui ne coalesce pas. Une faible agitation à 200 t/min. par un dispositif du type "ancre" ou "impeller" est suffisante pour maintenir le milieu dispersé pendant la polymérisation.

### (d) Conduite de la polymérisation

La suspension, dont la quantité engagée en polymérisation est de 4183,9 g, est chauffée à 70°C ; la durée de montée en température jusqu'à 70°C est de 35 minutes. On maintient cette température jusqu'à apparition de l'exotherme de l'ordre de 1°C après 3 heures et 20 minutes. On chauffe alors à 95°C en 20 minutes. Cette température est maintenue pendant 2 heures. La quantité récupérée après polymérisation est de 4153,3 g.

Pour des commodités de manipulation, l'isolement de la poudre est effectué sur une partie aliquote du mélange polymérisé. On part de 700 g de mélange, qui sont filtrés, lavés à l'eau distillée et séchés à l'étuve sous vide à 70°C. On récupère 139,5 g de poudre fine sèche (diamètre moyen = 10,2 µm). Le filtrat obtenu est limpide, très faiblement opalescent.

Le rendement est de 98,5 %. Il s'agit d'une valeur minimale qui tient compte de toutes les pertes, en particulier de celles observées à la mise en suspension.

### (e) Evaluation des pertes de rendement (perte en monomère par polymérisation parasite en émulsion)

En fin de polymérisation, la phase aqueuse est isolée. On détermine le taux d'extrait sec. Connaissant le taux d'agents de suspension engagé, on détermine, par différence, la quantité de polymère polymérisé sous forme d'émulsion, ce qui permet de déterminer les pertes de monomères par polymérisation en émulsion (pertes de rendement).

Dans l'exemple 1, on part de 700 g de mélange polymérisé contenant théoriquement 560 g de phase aqueuse et 140 g de phase organique. Après filtration de la poudre, on lave par 87,4 g d'eau. La totalité de la phase aqueuse est donc de 560 + 87,4 = 647,4 g.

Une partie aliquote de cette phase aqueuse est évaporée à sec. On remonte à la quantité d'émulsion en déduisant de la valeur obtenue, la quantité d'alcool polyvinylique en solution.
. Phase aqueuse : 4,8228 g
. Quantité d'extrait sec : 0,0417 g
. Taux d'extrait sec : 0,865 %, soit 5,598 g de mélange alcool polyvinylique + poly(méthacrylate de méthyle) en émulsion. Or, la quantité d'alcool polyvinylique dissoute est de 1 % de la phase aqueuse, soit 5,6 g. Le taux de méthacrylate de méthyle polymérisé en émulsion est pratiquement nul (inférieur à la limite de détection qui est de 0,1 %).

### Exemples 2 à 4

On a répété l'Exemple 1 en modifiant les quantités de benzoquinone et d'EDTA. Les résultats, y compris ceux de l'Exemple 1 sont rapportés dans le Tableau 1 ci-après.

Comme à l'Exemple 1, le filtrat obtenu après récupération du polymère (dans les exemples selon l'invention) est limpide, faiblement opalescent.

### Exemples 5 et 6 - comparatifs

Dans les exemples témoin 5 et 6, dans lesquels on n'utilise pas le mélange des deux additifs (a) et (b), le filtrat se présente sous forme d'un latex opaque.

Les résultats sont indiqués au tableau 1.

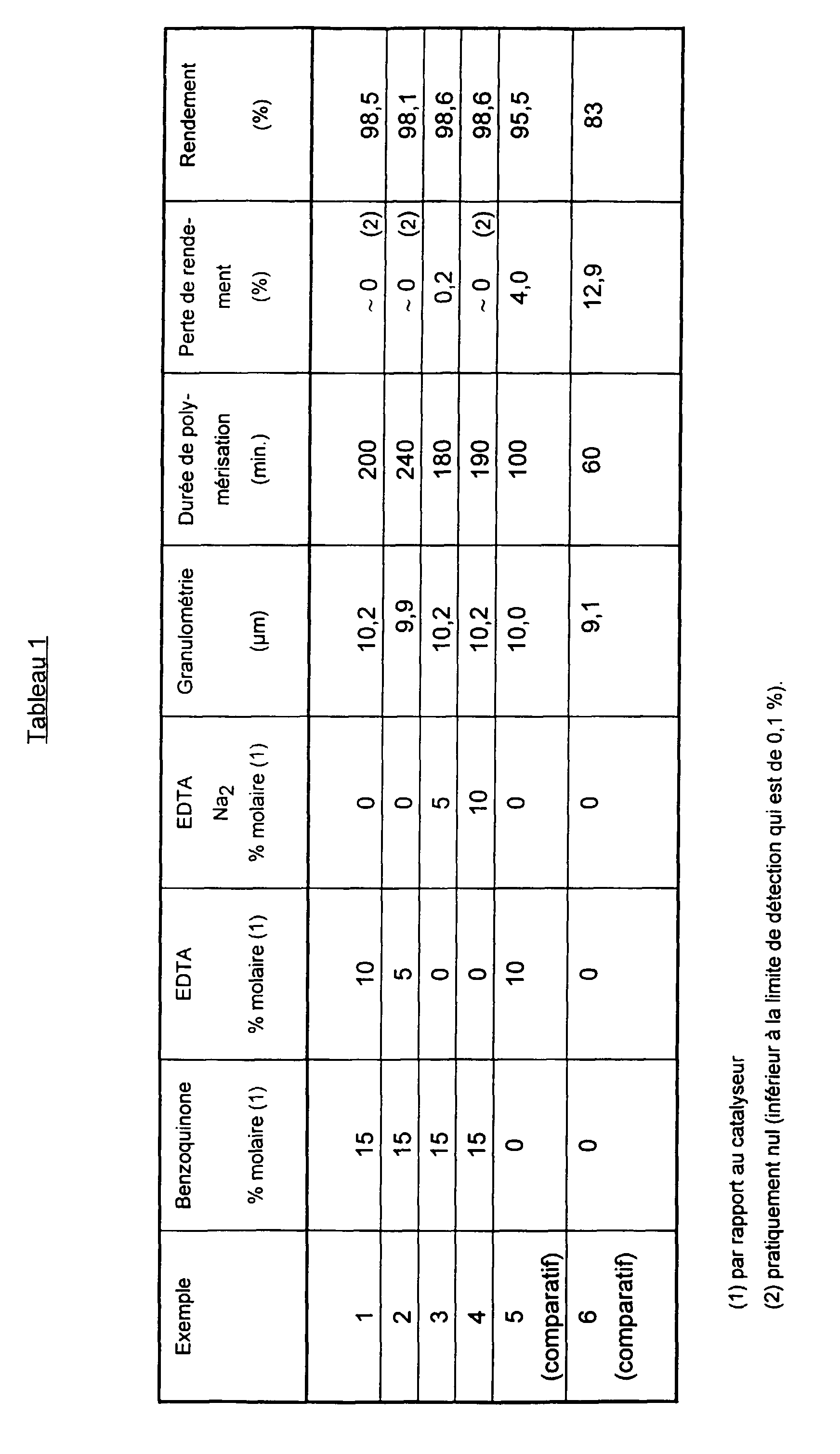

### Exemple 7 : Recyclage de phase aqueuse

On opère comme à l'Exemple 1.

On sépare le polymère et on récupère la phase aqueuse contenant l'agent de suspension.

On ajoute à cette phase aqueuse 15 % en mole de benzoquinone et 10 % en mole d'EDTA, par rapport au catalyseur.

On utilise cette nouvelle phase aqueuse pour une nouvelle polymérisation effectuée dans les mêmes conditions.

La perte de rendement par polymérisation en émulsion est pratiquement nulle (inférieure à la limite de détection du dosage).

### Exemple 8

Dans les mêmes conditions qu'à l'Exemple 1, on prépare une suspension à partir des phases aqueuse et organique suivantes :

| Phase aqueuse : | |
|---|---|
| Eau | 554,4 g |
| APV 26/88 | 3,6 g |
| APV 4/88 | 2,0 g |
| benzoquinone | 17,1 mg |
| Sel de sodium de l'acide éthylènediaminetétraméthylènephosphonique (Masquol^{®}P430Na de la Société Protex) | 64,5 mg |

| Phase organique : | |
|---|---|
| Méthacrylate de méthyle | 140 g |
| Peroxyde de dilauroyle | 0,42 g |

La polymérisation est effectuée comme à l'Exemple 1.

On récupère le polymère sous forme de poudre fine sèche (diamètre moyen de 10,5 µm).

Le taux de pertes de rendement par polymérisation en émulsion est de 0,2 %.

### Exemple 9

On opère comme à l'Exemple 1, mais on utilise un rapport pondéral de phase organique et de phase aqueuse de 30/70 et les constituants suivants :

| | |
|---|---|
| APV | = 0,25 % (mélange de 65 % APV 26/88 et de 35 % APV 4/88) |
| benzoquinone | = 15 % en mole |
| EDTA | = 10 % en mole |

La perte de rendement est nulle.

## Revendications

1. Procédé de fabrication de poudres de (co)polymère par polymérisation en suspension aqueuse d'au moins un monomère polymérisable en suspension, ladite polymérisation en suspension aqueuse étant conduite en présence d'au moins un générateur de radicaux libres comme catalyseur et en présence d'au moins un agent de suspension, caractérisé en ce que l'on conduit la polymérisation également en présence de :
(a) au moins un inhibiteur capteur de radicaux libres et
(b) au moins un agent complexant.

2. Procédé selon la revendication **1**, caractérisé en ce que les inhibiteurs (a) sont choisis parmi les quinones et les phénols.

3. Procédé selon la revendication **2**, caractérisé en ce que les inhibiteurs (a) sont choisis parmi la benzoquinone, la 2,5-dichlorobenzoquinone, la 2,6-dichlorobenzoquinone, la 3,4,5,6-tétrachloro-1,2-benzoquinone, l'hydroquinone, le pyrocatéchol et les méthoxyphénols.

4. Procédé conforme à l'une quelconque des revendications **1** à **3** caractérisé en ce que le complexant (b) est choisi parmi l'acide éthylènediaminetétraacétique et ses sels, les acides phosphoniques polyvalents et ses sels et l'acide citrique et ses sels, les acides polyhydroxamiques.

5. Procédé selon la revendication **4**, caractérisé en ce que les acides phosphoniques polyvalents entrant dans la définition des agents complexants (b) contiennent de 2 à 10 groupes acide dans la molécule, de préférence ceux choisis parmi l'acide 1-hydroxy-éthane-1,1-diphosphonique, l'acide nitrilo tris(méthylènephosphonique), l'acide éthylènediaminetétra(méthylènephosphonique), l'acide hexaméthylènediaminetétra(méthylènephosphonique), l'acide diéthylènetriaminepenta(méthylènephosphonique) et leurs sels de sodium.

6. Procédé selon l'une des revendications **1** à **5**, caractérisé en ce que les additifs (a) et (b) sont ajoutés à la phase aqueuse, à raison de 2 à 50 % en mole dans le cas des additifs (a), et à raison de 2 à 50 % en mole dans le cas des additifs (b), ces pourcentages étant donnés par rapport au catalyseur présent dans le système de polymérisation en suspension.

7. Procédé selon l'une des revendications **1** à **6**, caractérisé en ce que l'on polymérise les monomères choisis dans le groupe constitué par les esters de l'acide acrylique ou de l'acide méthacrylique et les monomères vinylaromatiques.

8. Procédé selon l'une des revendications **1** à **7**, caractérisé en ce que l'on utilise au moins un agent de suspension choisi parmi les alcools polyvinyliques, en particulier ceux ayant un taux d'hydrolyse au moins égal à 75 %, de préférence de 85 - 90 %, les éthers de cellulose, le phosphate tricalcique et les homopolymères de l'acide acrylique ou de l'acide méthacrylique ou les copolymères d'au moins 50 % en poids de ces acides avec un ou des comonomères copolymérisables avec eux, notamment le méthacrylate de méthyle, ces homo- ou copolymères étant utilisés de façon particulièrement préférée sous la forme de leurs sels de métaux alcalins ou de leurs sels d'ammonium ou bien sous forme neutralisée par le phosphate disodique et en ce que le ou les agents de suspension sont utilisés dans une quantité de 0,05 à 5 % en poids par rapport à l'eau présente dans le système de polymérisation en suspension.

9. Procédé selon l'une des revendications **1** à **8**, caractérisé en ce qu'on choisit le ou les catalyseurs parmi les peroxydes et les composés azoïques et qu'on les utilise à raison de 0,1 - 5 % en poids par rapport à la phase du ou des monomères.

10. Procédé selon l'une des revendications **1** à **9**, caractérisé en ce qu'on ajoute à la phase du ou des monomères jusqu'à 8 % en poids d'au moins un agent de transfert de chaîne.

11. Procédé conforme à l'une des revendications **1** à **10**, caractérisé en ce que le rapport monomère(s) / eau est compris entre 1/10 et 1/1, de préférence entre 1/4 et 1/2.

12. Procédé selon l'une des revendications **1** à **11**, caractérisé en ce qu'il est conduit à une température de 60°C à 120°C et pendant un laps de temps de 30 minutes à 7 heures.

13. Procédé selon l'une des revendications **1** à **12**, caractérisé en ce qu'il est conduit jusqu'à l'obtention de particules de polymère, donnant, après séchage, des perles de diamètre moyen, supérieur à 100 µm.

14. Procédé selon l'une des revendications **1** à **12**, caractérisé en ce qu'il est conduit jusqu'à l'obtention de particules de polymère, donnant, après séchage, des poudres de diamètre moyen compris entre 1 et 100 µm, en particulier entre 5 et 50 µm.

## Patentansprüche

1. Verfahren zur Herstellung von (Co)polymerpulvern durch Polymerisation in wäßriger Suspension mindestens eines in Suspension polymerisierbaren Monomeren, wobei die genannte Polymerisation in wäßriger Suspension in Gegenwart mindestens eines Bildners von freien Radikalen als Katalysator und in Gegenwart mindestens eines Suspensionsmittels durchgeführt wird, dadurch gekennzeichnet, daß man die Polymerisation auch in Gegenwart:
(a) mindestens eines Inhibitors und Fängers für freie Radikale und
(b) mindestens eines Komplexbildners durchführt.

2. Verfahren nach Anspruch 1, dadurch gekennzeichnet, daß die Inhibitoren (a) aus den Chinonen und den Phenolen gewählt sind.

3. Verfahren nach Anspruch 2, dadurch gekennzeichnet, daß die Inhibitoren (a) aus Benzochinon, 2,5-Dichlorbenzochinon, 2,6-Dichlorbenzochinon, 3,4,5,6-Tetrachlor-1,2-benzochinon, Hydrochinon, Pyrocatechin und den Methoxyphenolen gewählt sind.

4. Verfahren nach irgendeinem der Ansprüche 1 bis 3, dadurch gekennzeichnet, daß der Komplexbildner (b) aus Ethylendiamintetraessigsäure und ihren Salzen, den mehrwertigen Phosphonsäuren und ihren Salzen, Zitronensäure und ihren Salzen sowie den Polyhydroxamsäuren gewählt ist.

5. Verfahren nach Anspruch 4, dadurch gekennzeichnet, daß die zu den Komplexbildnern (b) gehörenden mehrwertigen Phosphonsäuren 2 bis 10 Säuregruppen im Molekül enthalten, vorzugsweise diejenigen, die aus 1-Hydroxy-ethan-1,1-diphosphonsäure, Nitrilotri(methylenphosphon)säure, Ethylendiamintetra(methylenphosphon)säure, Hexamethylendiamintetra(methylenphosphon)säure, Diethylentriaminpenta(methylenphosphon)säure und ihren Natriumsalzen gewählt sind.

6. Verfahren nach einem der Ansprüche 1 bis 5, dadurch gekennzeichnet, daß die Zusätze (a) und (b) der wäßrigen Phase mit einem Stoffmengenanteil von 2 bis 50 % im Fall der Zusätze (a) und mit einem Stoffmengenanteil von 2 bis 50 % im Fall der Zusätze (b) zugegeben werden, wobei diese Anteile auf den im System der Polymerisation in Suspension vorliegenden Katalysator bezogen sind.

7. Verfahren nach einem der Ansprüche 1 bis 6, dadurch gekennzeichnet, daß man die Monomeren polymerisiert, die aus der Gruppe gewählt sind, die aus den Acrylsäure- oder Methacrylsäureestern und den vinylaromatischen Monomeren besteht.

8. Verfahren nach einem der Ansprüche 1 bis 7, dadurch gekennzeichnet, daß man mindestens ein Suspensionsmittel verwendet, das gewählt ist aus den Polyvinylalkoholen, insbesondere aus denen mit einem Hydrolysegrad von mindestens 75 %, vorzugsweise 85 bis 90 %, den Celluloseethern, Tricalciumphosphat und den Homopolymeren der Acrylsäure oder der Methacrylsäure oder den Copolymeren mit mindestens 50 Gew.-% dieser Säuren mit einem oder mehreren Comonomeren, die mit ihnen copolymerisierbar sind, insbesondere Methylmethacrylat, wobei diese Homo- oder Copolymeren in besonders bevorzugter Weise in Form ihrer Alkalimetallsalze oder ihrer Ammoniumsalze oder auch in durch Dinatriumphosphat neutralisierter Form verwendet werden, und daß das oder die Suspensionsmittel in einer Menge von 0,05 bis 5 Gew.-%, bezogen auf das im System der Polymerisation in Suspension vorliegende Wasser, verwendet werden.

9. Verfahren nach einem der Ansprüche 1 bis 8, dadurch gekennzeichnet, daß man den oder die Katalysatoren aus den Peroxiden und den AzoVerbindungen auswählt und daß man sie in einer Menge von 0,1 bis 5 Gew.-%, bezogen auf die Phase des oder der Monomeren, verwendet.

10. Verfahren nach einem der Ansprüche 1 bis 9, dadurch gekennzeichnet, daß man zu der Phase des oder der Monomeren bis zu 8 Gew.-% mindestens eines Kettenübertragungsmittels zugibt.

11. Verfahren nach einem der Ansprüche 1 bis 10, dadurch gekennzeichnet, daß das Verhältnis Monomere(s)/Wasser zwischen 1/10 und 1/1, vorzugsweise zwischen 1/4 und 1/2, liegt.

12. Verfahren nach einem der Ansprüche 1 bis 11, dadurch gekennzeichnet, daß es bei einer Temperatur von 60 °C bis 120 °C und in einem Zeitraum von 30 Minuten bis 7 Stunden durchgeführt wird.

13. Verfahren nach einem der Ansprüche 1 bis 12, dadurch gekennzeichnet, daß es bis zur Erzeugung von Polymerteilchen durchgeführt wird, die nach der Trocknung Perlen mit einem mittleren Durchmesser über 100 µm ergeben.

14. Verfahren nach einem der Ansprüche 1 bis 12, dadurch gekennzeichnet, daß es bis zur Erzeugung von Polymerteilchen durchgeführt wird, die nach der Trocknung Pulver mit einem mittleren Durchmesser zwischen 1 und 100 µm, insbesondere zwischen 5 und 50 µm, ergeben.

## Claims

1. Process for the manufacture of (co)polymer powders by aqueous suspension polymerization of at least one polymerizable monomer in suspension, the said aqueous suspension polymerization being carried out in the presence of at least one free radical generator as catalyst and in the presence of at least one suspending agent, characterized in that the polymerization is also carried out in the presence of:
(a) at least one inhibitor which is a scavenger of free radicals and
(b) at least one complexing agent.

2. Process according to Claim 1, characterized in that the inhibitors (a) are chosen from quinones and phenols.

3. Process according to Claim 2, characterized in that the inhibitors (a) are chosen from benzoquinone, 2,5-dichlorobenzoquinone, 2,6-dichlorobenzoquinone, 3,4,5,6-tetrachloro-1,2-benzoquinone, hydroquinone, pyrocatechol and methoxyphenols.

4. Process in accordance with any one of Claims 1 to 3, characterized in that the complexing agent (b) is chosen from ethylenediaminetetraacetic acid and its salts, polyvalent phosphonic acids and their salts, citric acid and its salts, and polyhydroxamic acids.

5. Process according to Claim 4, characterized in that the polyvalent phosphonic acids coming within the definition of the complexing agents (b) comprise from 2 to 10 acid groups in the molecule and are preferably those chosen from 1-hydroxyethane-1,1-diphosphonic acid, nitrilotris (methylenephosphonic acid), ethylenediaminetetra(methylenephosphonic acid), hexamethylenediaminetetra(methylenephosphonic acid), diethylenetriaminepenta (methylenephosphonic acid) and their sodium salts.

6. Process according to one of Claims 1 to 5, characterized in that the additives (a) and (b) are added to the aqueous phase in a proportion of 2 to 50 mol% in the case of the additives (a) and in a proportion of 2 to 50 mol% in the case of the additives (b), these percentages being given with respect to the catalyst present in the suspension polymerization system.

7. Process according to one of Claims 1 to 6, characterized in that monomers chosen from the group consisting of acrylic acid or methacrylic acid esters and vinylaromatic monomers are polymerized.

8. Process according to one of Claims 1 to 7, characterized in that use is made of at least one suspending agent chosen from poly(vinyl alcohol)s, in particular those having a degree of hydrolysis at least equal to 75%, preferably of 85-90%, cellulose ethers, tricalcium phosphate and acrylic acid or methacrylic acid homopolymers or copolymers of at least 50% by weight of these acids with one or more comonomers which are copolymerizable with them, in particular methyl methacrylate, these homo- or copolymers being used in a particularly preferred way in the form of their alkali metal salts or of their ammonium salts or else in the form neutralized with disodium phosphate, and in that the suspending agent or agents is/are used in an amount of 0.05 to 5% by weight with respect to the water present in the suspension polymerization system.

9. Process according to one of Claims 1 to 8, characterized in that the catalyst or catalysts is/are chosen from peroxides and azo compounds and in that they are used in a proportion of 0.1-5% by weight with respect to the phase of the monomer or monomers.

10. Process according to one of Claims 1 to 9, characterized in that up to 8% by weight of at least one chain transfer agent are added to the phase of the monomer or monomers.

11. Process in accordance with one of Claims 1 to 10, characterized in that the monomer(s)/water ratio is between 1/10 and 1/1, preferably between 1/4 and 1/2.

12. Process according to one of Claims 1 to 11, characterized in that it is carried out at a temperature of 60°C to 120°C and for a period of time of 30 minutes to 7 hours.

13. Process according to one of Claims 1 to 12, characterized in that it is carried out until polymer particles are obtained which give, after drying, beads with a mean diameter of greater than 100 µm.

14. Process according to one of Claims 1 to 12, characterized in that it is carried out until polymer particles are obtained which give, after drying, powders with a mean diameter of between 1 and 100 µm, in particular between 5 and 50 µm.
